# FASCICULE DE BREVET EUROPEEN

(11) **EP 1 292 635 B1**
(45) Date de publication et mention de la délivrance du brevet: **11.01.2006**
(21) Numéro de dépôt: 01962708.2
(22) Date de dépôt: 05.06.2001
(51) Int. Cl.: C08J 7/04, B60C 13/00, C09D 175/04

(54) **PROCEDE DE PROTECTION D'UN PNEUMATIQUE VIS A VIS DE L'OZONE**
VERFAHREN ZUM SCHÜTZEN EINES REIFEN GEGEN OZON
METHOD FOR PROTECTING A TYRE AGAINST OZONE

(30) Priorité: 07.06.2000 FR 0007313
(43) Date de publication de la demande: 19.03.2003
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: COTTIN, Alain, F-63100 Clermont-Ferrand (FR); PEYRON, Georges, F-63200 Riom (FR)
(74) Mandataire: Le Cam, Véronique Marie Christine
(86) Numéro de dépôt international: PCT/EP2001/006356
(87) Numéro de publication internationale: WO 2001/094453

(56) Documents cités:
- EP-A- 0 728 810
- CA-A- 1 057 640
- FR-A- 2 183 983
- US-A- 3 813 257

## Description

L'invention concerne l'état de surface de la surface extérieure des pneumatiques et plus particulièrement leur protection vis-à-vis de l'ozone et l'amélioration de leur esthétique.

En effet, les compositions caoutchouteuses vulcanisées à base de polymères diéniques comportant des doubles liaisons éthyléniques dans leur chaîne principale sont très sensibles à l'action de l'ozone.

Lorsqu'un article réalisé avec une telle composition élastomérique est soumis à une contrainte en présence d'ozone, l'action néfaste de l'ozone se manifeste par l'apparition de craquelures de surface orientées perpendiculairement à la direction de la contrainte. Si cette contrainte subsiste ou chaque fois qu'elle se produit, les craquelures se développent et peuvent causer la rupture complète de l'article.

Pour limiter cette dégradation, les compositions élastomériques incorporent couramment des composés chimiques anti-ozone ainsi que des cires. Les composés chimiques anti-ozone ralentissent la formation et la propagation des fissures dans des conditions de sollicitations statiques et dynamiques. Les cires apportent un complément de protection en statique par la formation d'un revêtement protecteur en surface.

Ces moyens de lutte contre la dégradation due à l'ozone ont prouvé leur efficacité. Malheureusement, les composés anti-ozone les plus efficaces ainsi que les cires se caractérisent aussi par leur aptitude à migrer jusqu'à la surface des articles et à les tâcher ou à les modifier. Notamment la migration en surface des cires modifie l'aspect extérieur des surfaces des compositions élastomères en les rendant ternes et grises. On appelle ce phénomène 1' " efflorescence " des cires.

Ces migrations sont dommageables sur des parties blanches ou colorées des pneumatiques mais pénalisent également les pneumatiques ou parties de pneumatiques de couleur noire qui voient leurs surfaces extérieures passer d'un aspect brillant à un aspect terne et gris. Pour préserver l'aspect de surface des pneumatiques, on limite donc la proportion de ces composés dans les mélanges caoutchouteux et par conséquent, leur action.

De plus, les proportions de cires et de composés anti-ozonants sont également limitées du fait des problèmes de cohésion de mélange et afin de conserver les propriétés des mélanges caoutchouteux.

D'autres solutions ont été proposées telles que celle décrite dans la demande EP-0 728 810, qui consiste à déposer sur la surface à protéger du pneumatique vulcanisé une ou plusieurs couches d'un revêtement de protection anti-ozone et anti-migrations constitué par une composition aqueuse comprenant un polymère choisi dans le groupe des esters acryliques, méthacryliques et vinyliques, et un constituant comprenant une silice hydrophile et un polymère dont le monomère est choisi parmi les monomères acryliques, méthacryliques et vinyliques. Un tel revêtement est d'autant plus intéressant qu'il est déposé sur le pneumatique déjà vulcanisé, ce qui évite toutes les contraintes et modifications liées aux mouvements de compositions crues lors de la cuisson.

Cependant une telle composition adhère mal sur une surface caoutchouteuse, c'est pourquoi, comme on le voit à la lecture de cette publication, cette composition est déposée en couche de très faible épaisseur, préférentiellement de 3 à 15 µm, ce qui rend son décollement difficile malgré une mauvaise adhérence.

Or la conséquence directe de la minceur du revêtement apparaît clairement être sa faible longévité.

Le document CA-1057640 A divulgue l'application sur le flanc d'un pneumatique d'un revêtement résistant à l'ozone, ce revêtement étant une composition de polyuréthanne contenant un promoteur d'adhésion.

Le document FR 2183983 A divulgue un pneumatique dont la surface de caoutchouc a été traitée par un agent modificateur avant d'y appliquer une composition de polyuréthanne.

L'invention a donc pour objet un procédé de protection de la surface extérieure d'un pneumatique vis-à-vis de l'ozone et d'amélioration de l'esthétique du pneumatique, de mise en oeuvre simple.

La demanderesse a découvert de façon surprenante que certains polyuréthanes peuvent constituer un revêtement de protection. Ce revêtement peut avantageusement être déposé sur le pneumatique vulcanisé après un traitement de la surface concernée, ce qui permet au polyuréthane d'adhérer de façon satisfaisante à la surface du pneumatique et ainsi, notamment, de ne pas avoir de limitation en terme d'épaisseur du revêtement.

Selon l'invention, le pneumatique dont une partie au moins de la surface caoutchouteuse extérieure à base d'élastomères diéniques essentiellement insaturés est recouverte d'un revêtement de protection vis-à-vis de l'ozone caractérisé par le fait que ce revêtement comprend au moins une couche au contact de l'air constituée par du polyuréthane réalisé à partir d'un polyol choisi parmi les polyéthers ou polyesters aliphatiques et les polyéthers ou polyesters dont la chaîne principale est semi-aromatique, la liaison entre l'élastomère et le polyuréthane étant réalisée grâce aux fonctions polaires polaires et ce revêtement comprenant des agents tensioactifs. Ces fonctions polaires situées à la surface de l'élastomère sont encore plus efficaces lorsqu'elles possèdent au moins un hydrogène mobile capable de réagir avec le revêtement pour former des liaisons covalentes.

Avantageusement, le polyuréthane possède une température de transition vitreuse inférieure ou égale à -20°C et un allongement à la rupture supérieur ou égal à 100%.

La température de transition vitreuse d'un polymère est la température où le comportement mécanique du polymère évolue d'un comportement vitreux, rigide et cassant à un comportement caoutchouteux.

Cette couche permet, ainsi, de former un revêtement continu, souple et adhérent sur la surface du pneumatique. Ce revêtement s'oppose par sa présence aux dégradations dues à l'ozone. Le comportement caoutchouteux du revêtement obtenu permet de résister à toutes les déformations subies après la fabrication des pneumatiques et en particulier lors de son gonflage et dans son utilisation ultérieure.

Par ailleurs, ce revêtement présente l'avantage d'empêcher les migrations des cires vers la surface par effet barrière en évitant ainsi leur efflorescence.

Ce revêtement confère également un aspect esthétique intéressant au pneumatique en jouant le rôle d'un vernis dont on peut faire varier la brillance en rajoutant de manière connue un additif tel que de la silice hydrophile (dans des proportions allant de 5 à 30 parties pour cent parties de polyuréthane). Un tel vernis non pigmenté est transparent et ce vernis :
- peut être appliqué sur un pneumatique noir sans que la migration des dérivés oxydés des antiozonants ne soit génante car ces derniers restent en solution dans la couche de vernis quasiment sans que le noir du pneumatique perçu par transparence ne soit modifié,
- ou peut également être appliqué sur une partie colorée de pneumatique qui dans ce cas ne doit pas contenir d'antiozonants donnant des dérivés oxydés tachants (fortement colorés).

De plus, pour masquer les irrégularités de teinte à la surface d'un pneumatique noir il peut être avantageux de teinter le vernis en noir en rajoutant un pigment organique noir ou du noir de carbone.

Le procédé de protection anti-ozone d'au moins une partie de la surface extérieure d'un pneumatique, dont la composition est à base d'élastomères diéniques essentiellement insaturés, comprend, conformément à l'invention, les étapes suivantes :
- on fait subir un traitement à la surface du pneumatique vulcanisé afin de rendre polaire et fonctionnaliser les élastomères de cette surface,
- on applique sur cette surface traitée au moins une couche constituée par une dispersion aqueuse de polyuréthane,
- et on laisse sécher cette couche jusqu'à la formation d'un revêtement de protection.
   Avantageusement, l'application de la dispersion aqueuse de polyuréthane est réalisée à température ambiante.

Ainsi ce procédé peut aisément être mis en oeuvre sur le pneumatique vulcanisé et ceci, sans nécessiter par ailleurs, d'opération de chauffage bien qu'il soit possible par une élévation modérée de la température à la surface du pneumatique d'accélérer les opérations de séchage.

D'autres avantages et caractéristiques de l'invention apparaîtront à la lecture d'un exemple de réalisation d'un pneumatique conforme à l'invention et du procédé de mise en oeuvre.

Le procédé vise à protéger vis-à-vis de l'ozone et à améliorer l'esthétique de la surface d'un pneumatique, dont la composition est à base d'élastomères diéniques essentiellement insaturés.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Le procédé consiste dans un premier temps à déposer sur ladite surface extérieure à protéger du pneumatique vulcanisé, une solution contenant un agent de fonctionnalisation afin de fonctionnaliser les élastomères diéniques et de permettre ensuite le collage d'une dispersion aqueuse de polyuréthane conforme à l'invention. Le pneumatique peut être indifféremment monté et gonflé préalablement à ces opérations ou non.

L'agent de fonctionnalisation est choisi préférentiellement parmi le groupe constitué par les hypochlorites alcalins ou alcalino-terreux additionnés à de l'acide chlorhydrique, en particulier les hypochlorites de sodium, de potassium ou de calcium, et par l'acide trichloroisocyanurique, TIC, qui permettent de réaliser une chloration et une oxydation à la surface du mélange caoutchouteux.

Les agents de fonctionnalisation étant en solution dans un solvant tel que l'eau pour les hypochlorites et dans un solvant anhydre tel que l'acétate d'éthyle pour l'acide trichloroisocyanurique dans une concentration allant de 1 à 5% en poids, qui présentent tous deux l'avantage de s'évaporer ensuite aisément.

Ce traitement permet de rendre polaire et fonctionnaliser la surface caoutchouteuse de façon à permettre une très bonne adhésion de la couche de polyuréthane et en permettant la formation de liaisons covalentes entre le polyuréthane et les élastomères diéniques essentiellement insaturés du mélange caoutchouteux grâce aux fonctions polaires créées. Le TIC permet également d'améliorer le mouillage ce qui favorise encore l'adhésion de la couche de polyuréthane.

On peut ainsi déposer une telle solution à température ambiante, l'application pouvant se faire par tous les moyens connus et notamment au pinceau, au rouleau ou par pulvérisation au pistolet.

On laisse alors sécher la solution de 10 à 30 minutes afin d'une part que la réaction chimique avec la surface caoutchouteuse puisse avoir lieu et, d'autre part, que le solvant s'évapore. Pour accélérer cette opération on peut procéder à un chauffage de la surface du pneumatique, cependant il faut veiller à ce que celle-ci ne dépasse pas 60°C afin d'éviter que les fonctions polaires formées à la surface ne migrent vers l'intérieur du mélange caoutchouteux et ne soient alors plus accessibles ni disponibles afin d'opérer des liaisons avec le polyuréthane.

On applique alors sur la surface ainsi traitée une couche mince d'une dispersion aqueuse de polyuréthane par tout moyen approprié comme pour le traitement précédent.

L'utilisation d'une dispersion aqueuse est particulièrement intéressante. En effet, on peut ainsi d'une part déposer le polyuréthane par tout moyen choisi notamment par pulvérisation ce qui présente l'avantage de pouvoir réaliser une couche extrêmement fine si on le souhaite, d'autre part, on obtient par la dépose de cette dispersion aqueuse une répartition très homogène des molécules de polyuréthane dans la couche réalisée et comme on le redira plus tard avec une réaction qui ne nécessite pas d'apport calorique.

Malgré ces avantages l'utilisation d'une telle dispersion va à l'encontre des a priori de l'homme du métier. En effet, ce sont généralement les groupes isocyanates libres portés par les polyuréthanes qui permettent de créer une liaison entre surface polaire et lesdits polyuréthanes, or les groupes isocyanates libres nuisent à la stabilité du polyuréthane dans l'eau, il paraît donc tout à fait cohérent d'écarter la possibilité d'une dispersion aqueuse, le problème de la liaison surface polaire - polyuréthane constituant déjà une difficulté à surmonter.

On a constaté de façon étonnante qu'avec des polyuréthanes autoréticulables tels que décrits dans la communication " New polymer synthesis for (self)crosslinkable urethanes and urethanes/acrylics " présentée par Ad. OVERBEEK EUROCOAT 97 à Lyon Eurexpo, 23-25 sept. 97, susceptibles de réticuler par formation d'azométhine ou par auto-oxydation, la seule présence des fonctions polaires chlorées ou oxydées est suffisante pour permettre l'adhésion du polyuréthane même sans isocyanate libre et son maintien malgré les sollicitations et les contraintes subies par le pneumatique comme le montreront les exemples cités plus loin dans la description. Or de tels polyuréthanes peuvent être utilisés sous forme de dispersion aqueuse.

On peut néanmoins faire appel à des polyuréthanes contenant des groupes isocyanates libres si ces derniers sont protégés au coeur des particules des dispersions aqueuses. On peut noter que des revêtements tels que décrit dans la demande EP-0 728 810 de l'art antérieur, ne réagissent pas avec des fonctions polaires et ainsi qu'un tel traitement de surface est sans intérêt pour de telles compositions.

Le polyuréthane utilisé dans la dispersion est réalisé à partir d'un polyol choisi parmi les polyéthers ou polyesters aliphatiques et les polyéthers ou polyesters dont la chaîne principale est semi-aromatique, ce qui assure au revêtement son insensibilité à l'ozone, ce polyuréthane possédant, de plus, une température de transition vitreuse inférieure ou égale à 20°C et un allongement à la rupture supérieur ou égal à 100% afin d'avoir un comportement caoutchouteux et une élasticité cohérente avec ceux du pneumatique pour résister aux sollicitations subies par ce dernier.

On choisit d'ailleurs de préférence un polyuréthane possédant un allongement à la rupture supérieur 200%.

Parmi les polyuréthanes conformes à l'invention, on peut citer les polyuréthanes obtenus à partir :
- de polyol de masse moléculaire comprise entre 500 et 4000 g à base d'un polyester tel qu'un polyéthylène adipate, un polycarbonate, un polycaprolactone ou à base d'un polyéther tel qu'un polypropylèneglycol, un polytétraméthylèneglycol ou un prolyhexaméthylèneglycol,
- d'un polyisocyanate de fonctionnalité 2 tel que le toluène diisocyanate (TDI), le diphényle méthane diisocyanate (MDI), le dicyclohexyl méthane diisocyanate, le cyclohexyl diisocyanate ou l'isophrone diisocyanate, ou de fonctionnalité 3 tel qu'un triisocyanate obtenu par trimérisation d'un des diisocyanates cités ci-dessus ou de fonctionnalité comprise entre 2 et 3 tel qu'un polyisocyanate liquide dérivé du MDI ;
- et éventuellement d'un allongeur tel qu'une diamine ou un diol dissout dans la phase aqueuse de la dispersion de polyuréthane.

Quel que soit le polyuréthane choisi, il est nécessaire de prévoir dans la dispersion aqueuse la présence d'agents tensioactifs pour améliorer notamment la stabilité de l'émulsion réalisée.

Ces agents tensioactifs peuvent être soit ajoutés à la dispersion, des groupes polaires à caractère anionique tels que les carboxylates, les sulfonates, les sulfates ou les phosphates, paraissant particulièrement intéressants bien que l'on puisse tout à fait envisager de faire appel à d'autres agents tensioactifs, soit directement portés par la chaîne du polyuréthanne.

La concentration de polyuréthane dans la dispersion aqueuse de polyuréthane est préférentiellement comprise entre 10 et 50 % en fonction de la localisation de la surface du pneumatique à protéger, en effet en dessous de 10% la concentration est trop faible pour obtenir les effets escomptés et au-delà de 50% la dispersion devient très visqueuse et difficile à appliquer.

Le choix de la concentration dépend de la nécessité ou non pour la surface à protéger d'une épaisseur finale importante de revêtement auquel cas on choisira de préférence la concentration la plus élevée pour diminuer le nombre de couches à appliquer et inversement.

On laisse alors sécher ladite couche jusqu'à ce que le polyuréthane ait complètement réagi avec les fonctions réactives en surface du mélange caoutchouteux afin d'adhérer sur la surface traitée et que l'eau se soit totalement évaporée formant ainsi le revêtement de protection. A température ambiante, le temps de séchage est de l'ordre de l'heure, temps que l'on peut comme précédemment réduire à quelques minutes en opérant un chauffage, par exemple en réalisant une circulation d'air chaud ou par chauffage radian, qui respecte un maintien d'une température en surface du pneumatique inférieure à 60°.

Pour avoir l'épaisseur voulue du revêtement formé après le séchage de la dispersion aqueuse, il peut être intéressant d'appliquer la solution polyuréthane en une ou plusieurs couches successives. De bons résultats sont obtenus avec des revêtements secs d'une épaisseur supérieure ou égale à 5 µm.

Cependant l'épaisseur souhaitée va varier en fonction de la surface où le revêtement est appliqué.
Ainsi pour les fonds de sillon des sculptures de la bande de roulement des pneumatiques pour avion qui se fissurent rapidement sous l'action de l'ozone même au repos du fait des contraintes permanentes importantes dues à la pression de gonflage, on préfèrera une épaisseur comprise entre 100 µm et 500 µm. Par contre, pour une application par exemple sur la surface extérieure des flancs d'un pneumatique, une épaisseur comprise entre 5 µm et 50µm sera suffisante.

Bien entendu, le revêtement de protection ne peut pas être efficace sur les parties du pneumatique en contact permanent avec le sol. Ainsi si on le dépose sur l'ensemble de la surface de la bande de roulement, le revêtement permet de protéger la bande de roulement avant son utilisation et poursuit son action sur les parties qui ne sont pas en contact avec le sol donc notamment les fonds de creux (sillon) des sculptures, la partie de revêtement recouvrant les sommets des sculptures directement en contact avec le sol étant rapidement détruite puisque soumise à usure.

Dans ce qui suit, on décrira un exemple de pneumatique comportant un revêtement conforme à l'invention, pour protéger les fonds de sillon des sculptures de sa bande de roulement. Cet exemple ne saurait constituer une limitation des surfaces d'un pneumatique protégeables grâce à un tel revêtement.

Ainsi, le pneumatique vulcanisé comprend une bande de roulement dont la surface extérieure qui a été fonctionnalisée afin de présenter à sa surface des fonctions polaires réactives, est recouverte par une couche de polyuréthane adhérant à cette surface par ses liaisons covalentes avec les fonctions créées. La couche de polyuréthane constitue ainsi un revêtement de protection vis-à-vis de l'ozone constitué par une dispersion aqueuse de polyuréthane.

Ce revêtement recouvre l'ensemble de la surface de la bande de roulement, c'est-à-dire les fonds des sculptures et les sommets des sculptures en contact direct avec le sol.
Comme on l'a dit précédemment, il est clair que, très rapidement, lors du roulage, le revêtement recouvrant les sommets des sculptures disparaîtront du fait de l'usure de la bande de roulement, par contre le revêtement reste permanent sur les fonds de sculpture.

Les exemples qui suivent illustrent l'invention sans toutefois la limiter.

Dans les exemples, les propriétés des compositions sont évaluées comme suit :
- " Tenue en statique" : test de la résistance mécanique du revêtement, le pneumatique étant laissé pendant 96 heures sous 40 pphm, parties par centaine de millions, d'ozone.
- " Tenue en dynamique " : test de la résistance mécanique du revêtement sous sollicitation dynamique, 6000 km sur une rouleuse avec une flèche imposée de 30 % à 50km/h sous 40 pphm d'ozone, ce test impose une déformation dynamique en surface des flancs de l'ordre de 15 % d'extension.
- " Test avion " : test de la résistance mécanique du revêtement sous sollicitation dynamique lors de 8 " roulages " avec une force Z de 30470daN s'exerçant sur le pneumatique, 2 " roulages " avec une force 1,2Z et de 50 " décollages " avec une force Z et 1 " décollage " avec une force 1,5Z. Le " roulage " correspond à une distance parcourue de 11km à 65 km/h et le " décollage " à une distance minimum de 3,5 km à une vitesse de 380km/h.
- " Aspect " : observation visuelle (à l'oeil nu) de l'aspect esthétique du revêtement.

Les compositions utilisées dans les exemples sont les suivantes :
- Solution A : dispersion (à 38%) de polyuréthane réalisé à partir d'un polyester aliphatique présentant un taux d'élongation inférieur à 50%, commercialisée par la société AVECIA sas, sous la dénomination NeoRez R-560.
- Solution B : dispersion (à 35%) de polyuréthane réalisé à partir d'un polyester aliphatique présentant un taux d'élongation supérieur à 700 %, commercialisée par la société AVECIA sas, sous la dénomination NeoRez R-550.
- Solution C : dispersion (à 40%) de polyuréthane réalisé à partir d'un polyéther aliphatique ne présentant un taux d'élongation de 650 %, commercialisée par la société AVECIA sas, sous la dénomination NeoRez R-987.
- Solution TIC : Acide trichloroisocyanurique à 3% dans de l'acétate d'éthyle.

### Exemple 1

Dans cet exemple, on a utilisé un pneumatique de tourisme de dimension 185/65 R14 gonflé sous une pression de 2 bars pour tester en dynamique l'efficacité d'un revêtement conforme à l'invention.

La surface d'une moitié de flanc de ce pneumatique, surface témoin, a été laissée dans son état après vulcanisation du pneumatique pour servir de témoin.

La surface de l'autre moitié de flanc, surface revêtue, a été traitée avant gonflage avec une solution de TIC, séchée puis on a appliqué sur cette moitié la solution A diluée jusqu'à l'obtention d'une concentration de 20 %. Après séchage, la couche de polyuréthane obtenue est d'environ 7 µm.

Le pneumatique est alors monté sur une jante et gonflé à une pression de 2 bars.

Après le test de tenue en dynamique, on constate l'aspect des flancs du pneumatique :
- la surface témoin est complètement fissurée et présente une coloration terne et grise caractérisant le fait que le phénomène d'efflorescence des cires s'est produit,
- la surface revêtue a gardé son revêtement brillant cependant quelques détériorations sont apparus montrant que le taux d'élongation du polyuréthane utilisé est insuffisant.

Malgré le manque de souplesse du revêtement testé ici, son efficacité vis-à-vis de l'ozone et pour préserver l'esthétique de la surface du pneumatique apparaît clairement.

### Exemple 2

Dans cet exemple, on a utilisé un pneumatique d'avion de dimension 50*200 R22 afin de comparer l'efficacité de revêtements conformes à l'invention par rapport à un témoin non protégé.

On a recouvert 3 fonds de sillon des sculptures de la bande de roulement du pneumatique, comme suit :
Fonds de sillon 2 : aucun revêtement, fonds de sillon témoin.
Fonds de sillon 2B : on a appliqué la solution TIC puis, après séchage, on a déposé la solution B pour obtenir une épaisseur après séchage d'environ 100µm.
Fonds de sillon 2C : identique au fonds de sillon 2B mais avec la solution C.
Après gonflage du pneumatique monté sur jante à 16 bars, les résultats obtenus suite au test de tenue en statique sont consignés dans le tableau II suivant :

**Tableau II**

| **Fonds de sillon** | **2** | **2B** | **2C** |
|---|---|---|---|
| **Traitement surface** | - | Solution TIC | Solution TIC |
| **Revêtement** | - | Solution B | Solution C |
| **Aspect après test statique** | Très fissuré | Pas de dégradation | Pas de dégradation |

On constate que le fonds de sillon 2 ne comportant aucun revêtement et qui correspond en fait à un témoin, est complètement fissuré, en effet même en statique étant donné la pression de gonflage des pneumatiques les déformations permanentes sont très importantes, elles atteignent localement 100%, et l'action de l'ozone est donc très efficace.

Par contre, sur les fonds de sillon 2B et 2C, dont les surfaces ont été activées et recouvertes respectivement avec les revêtements à base de solution B et C conformes à l'invention, on constate qu'il n'apparaît aucune dégradation c'est-à-dire pas de décollement du revêtement et pas de fissure. Ces fonds de sillon 2B et 2C ont donc été protégés efficacement contre l'action de l'ozone aussi bien dans le cas d'un polyuréthane à base de polyester ou polyéther aliphatique.

### Exemple 3

Dans cet exemple, on a utilisé un pneumatique identique à celui décrit dans l'exemple précédent pour réaliser un test avion et étudier l'influence des déformations dynamiques lors de roulage et décollage de tel pneumatique sur la tenue d'un revêtement conforme à l'invention.

Les fonds de sillon des sculptures de la bande de roulement du pneumatique ont été préparés comme suit :

Les fonds de sillon 3B et 3C sont respectivement identiques aux fonds de sillon 2B et 2C de l'exemple précédent.

Les fonds de sillon 3'B et 3'C n'ont pas subi l'opération de traitement de surface avec la solution TIC mais sont recouverts par un revêtement d'une épaisseur d'environ 100µm de polyuréthane obtenu à partir du dépôt respectivement des solutions B et C.

Les résultats obtenus sont consignés dans le tableau III suivant.

**Tableau III**

| **Fonds de sillon** | **3B** | **3C** | **3'B** | **3'C** |
|---|---|---|---|---|
| **Traitement surface** | Solution TIC | Solution TIC | - | - |
| **Revêtement** | Solution B | Solution C | Solution B | Solution C |
| **Aspect après test dynamique** | Pas de dégradation | Pas de dégradation | Fissuré Revêtement décollé | Fissuré Revêtement décollé |

On constate que les revêtements conformes à l'invention des fonds de sillon 3B et 3C ont résisté sous atmosphère normale et au décollement dans les tests dynamiques, par contre les revêtements recouvrant les fonds de sillon 3'B et 3'C sous l'effet de la force centrifuge se sont décollés et n'ont donc plus protégé les fonds de sillon qui se sont fissurés sous l'action de l'ozone présente dans l'atmosphère.

Les revêtements polyuréthanes conformes à l'invention assurent donc une protection anti-ozone aussi bien sous contraintes en statique et en dynamique, cependant il est nécessaire pour maintenir la liaison entre ces revêtements et la surface caoutchouteuse à protéger de faire subir à celle-ci, préalablement au dépôt du revêtement, un traitement de fonctionnalisation permettant ensuite la création avec le revêtement de liaisons covalentes.

## Revendications

1. Procédé de protection anti-ozone d'au moins une partie de la surface extérieure d'un pneumatique, à base d'élastomères diéniques essentiellement insaturés, dans lequel :
- on fait subir un traitement à la surface du pneumatique vulcanisé afin de rendre polaire et fonctionnaliser les élastomères de cette surface,
- on applique sur cette surface traitée au moins une couche constituée par une dispersion aqueuse de polyuréthane,
- et on laisse sécher cette couche jusqu'à la formation d'un revêtement de protection.

2. Procédé selon la revendication 1, dans lequel l'application de la dispersion aqueuse de polyuréthane est réalisée à température ambiante.

3. Procédé selon l'une quelconque des revendications 1 ou 2, dans lequel le séchage de la couche constituée par la dispersion aqueuse de polyuréthane est réalisé à température ambiante.

4. Procédé selon l'une quelconque des revendications 1 ou 2, dans lequel le séchage de la couche constituée par une dispersion aqueuse de polyuréthane est réalisé à chaud, la température de la surface revêtue ne dépassant pas 60°C.

5. Procédé selon l'une quelconque des revendications 1 à 4, dans lequel le traitement de surface du pneumatique consiste à déposer sur ladite surface un agent de fonctionnalisation en solution dans un solvant, et à sécher jusqu'à évaporation du solvant.

6. Procédé selon la revendication 5, dans lequel le dépôt de la solution contenant l'agent de fonctionnalisation est réalisé à température ambiante.

7. Procédé selon l'une quelconque des revendications 5 ou 6, dans lequel le séchage de la solution contenant l'agent de fonctionnalisation est réalisé à température ambiante.

8. Procédé selon l'une quelconque des revendications 5 ou 6, dans lequel le séchage de la solution contenant l'agent de fonctionnalisation est réalisé à chaud, la température de la surface où la solution a été déposée ne dépassant pas 60°C.

9. Procédé selon l'une quelconque des revendications 5 à 8, dans lequel l'agent de fonctionnalisation est choisi parmi les hypochlorites alcalins ou alcalino-terreux additionnés à de l'acide chlorhydrique.

10. Procédé selon la revendication 9, dans lequel l'agent de fonctionnalisation est choisi parmi le groupe constitué par les hypochlorites de sodium, de potassium ou de calcium additionnés à de l'acide chlorhydrique.

11. Procédé selon l'une quelconque des revendications 5 à 8, dans lequel l'agent de fonctionnalisation est l'acide trichloroisocyanurique.

12. Procédé selon la revendication 11, dans lequel l'acide trichloroisocyanurique est mis en solution dans de l'acétate d'éthyle.

13. Procédé selon l'une quelconque des revendications 1 à 12, dans lequel la dispersion aqueuse de polyuréthane contient des agents tensioactifs.

14. Procédé selon la revendication 13, dans lequel les agents tensioactifs sont constitués par des groupes fonctionnels portés par la chaîne du polyuréthane.

15. Procédé selon la revendication 13, dans lequel les agents tensioactifs contiennent des groupes polaires à caractère anionique.

16. Procédé selon l'une des revendications 1 à 15, dans lequel le polyuréthane est autoréticulable.

17. Procédé selon l'une quelconque des revendications 1 à 16, dans lequel la concentration de polyuréthane dans la dispersion aqueuse de polyuréthane est comprise entre 10 et 50 % en poids.

18. Procédé selon l'une quelconque des revendications 1 à 17, dans lequel le polyuréthane utilisé dans la dispersion aqueuse de polyuréthane est réalisé à partir d'un polyol choisi parmi les polyéthers ou polyesters aliphatiques et les polyéthers ou polyesters dont la chaîne principale est semi-aromatique, le polyuréthane possédant une température de transition vitreuse inférieure ou égale à -20°C et un allongement à la rupture supérieur ou égal à 100%.

## Claims

1. Method for anti-ozone protection of at least a part of the outer surface of a tyre, based on essentially unsaturated diene elastomers, in which:
- the surface of the vulcanised tyre is subjected to a treatment in order to render polar and functionalise the elastomers of this surface,
- at least one layer consisting of an aqueous polyurethane dispersion is applied to this treated surface,
- and this layer is allowed to dry until a protective coating is formed.

2. Method according to Claim 1, in which the aqueous polyurethane dispersion is applied at ambient temperature.

3. Method according to either one of Claims 1 or 2, in which the layer consisting of the aqueous polyurethane dispersion is dried at ambient temperature.

4. Method according to either one of Claims 1 or 2, in which the layer consisting of an aqueous polyurethane dispersion is dried using heat, the temperature of the coated surface not exceeding 60°C.

5. Method according to any one of Claims 1 to 4, in which the surface treatment of the tyre consists in depositing on the said surface a functionalising agent in solution in a solvent, and in drying until the solvent evaporates.

6. Method according to Claim 5, in which the solution containing the functionalising agent is deposited at ambient temperature.

7. Method according to either one of Claims 5 or 6, in which the solution containing the functionalising agent is dried at ambient temperature.

8. Method according to either one of Claims 5 or 6, in which the solution containing the functionalising agent is dried using heat, the temperature of the surface on which the solution has been deposited not exceeding 60°C.

9. Method according to any one of Claims 5 to 8, in which the functionalising agent is selected from alkali metal or alkaline-earth metal hypochlorites added to hydrochloric acid.

10. Method according to Claim 9, in which the functionalising agent is selected from the group consisting of sodium, potassium or calcium hypochlorites added to hydrochloric acid.

11. Method according to any one of Claims 5 to 8, in which the functionalising agent is trichloroisocyanuric acid.

12. Method according to Claim 11, in which the trichloroisocyanuric acid is dissolved in ethyl acetate.

13. Method according to any one of Claims 1 to 12, in which the aqueous polyurethane dispersion contains surfactants.

14. Method according to Claim 13, in which the surfactants consist of functional groups carried by the chain of the polyurethane.

15. Method according to Claim 13, in which the surfactants contain polar groups of anionic nature.

16. Method according to one of Claims 1 to 15, in which the polyurethane is self-crosslinkable.

17. Method according to any one of Claims 1 to 16, in which the polyurethane concentration in the aqueous polyurethane dispersion is between 10 and 50 wt.%.

18. Method according to any one of Claims 1 to 17, in which the polyurethane used in the aqueous polyurethane dispersion is prepared from a polyol selected from aliphatic polyethers or polyesters and polyethers or polyesters whose main chain is semi-aromatic, the polyurethane having a glass transition temperature of less than or equal to -20°C and an elongation at break of greater than or equal to 100%.

## Patentansprüche

1. Verfahren zum Schutz mindestens eines Teils der äußeren Oberfläche eines Luftreifens auf der Basis von im Wesentlichen ungesättigten Dienelastomeren gegenüber Ozon, bei dem:
- die Oberfläche des vulkanisierten Luftreifens behandelt wird, um die Elastomere der Oberfläche polar zu machen und zu funktionalisieren;
- auf die behandelte Oberfläche mindestens eine Schicht aufgebracht wird, die aus einer wässerigen Polyurethandispersion besteht, und
- die Schicht trocknen gelassen wird, bis sich ein Schutzüberzug gebildet hat.

2. Verfahren nach Anspruch 1, wobei das Aufbringen der wässerigen Polyurethandispersion bei Umgebungstemperatur realisiert wird.

3. Verfahren nach einem der Ansprüche 1 oder 2, wobei das Trocknen der Schicht, die aus der wässerigen Polyurethandispersion besteht, bei Raumtemperatur durchgeführt wird.

4. Verfahren nach einem der Ansprüche 1 oder 2, wobei das Trocknen der Schicht, die aus einer wässerigen Polyurethandispersion besteht, in der Wärme erfolgt, wobei die Oberflächentemperatur 60 °C nicht übersteigt.

5. Verfahren nach einem der Ansprüche 1 bis 4, wobei die Behandlung der Oberfläche des Luftreifens darin besteht, auf der Oberfläche ein in einem Lösungsmittel gelöstes Funktionalisierungsmittel aufzubringen und bis zum Verdampfen des Lösungsmittels zu trocknen.

6. Verfahren nach Anspruch 5, wobei das Abscheiden der Lösung, die das Funktionalisierungsmittel enthält, bei Raumtemperatur erfolgt.

7. Verfahren nach einem der Ansprüche 5 oder 6, wobei das Trocknen der Lösung, die das Funktionalisierungsmittel enthält, bei Raumtemperatur durchgeführt wird.

8. Verfahren nach einem der Ansprüche 5 oder 6, wobei das Trocknen der Lösung, die das Funktionalisierungsmittel enthält, in der Wärme erfolgt, wobei die Temperatur der Oberfläche, auf die die Lösung aufgebracht wurde, 60 °C nicht übersteigt.

9. Verfahren nach einem der Ansprüche 5 bis 8, wobei das Funktionalisierungsmittel unter den Alkalihypochloriten oder Erdalkalihypochloriten, die Salzsäure beigemengt wurden, ausgewählt ist.

10. Verfahren nach Anspruch 9, wobei das Funktionalisierungsmittel unter Natriumhypochlorit, Kaliumhypochlorit oder Calciumhypochlorit, die Salzsäure beigemengt wurden, ausgewählt ist.

11. Verfahren nach einem der Ansprüche 5 bis 8, wobei das Funktionalisierungsmittel die Trichlorisocyanursäure ist.

12. Verfahren nach Anspruch 11, wobei die Trichlorisocyanursäure in Ethylacetat gelöst wird.

13. Verfahren nach einem der Ansprüche 1 bis 12, wobei die wässerige Polyurethandispersion grenzflächenaktive Stoffe enthält.

14. Verfahren nach Anspruch 13, wobei die grenzflächenaktiven Stoffe aus funktionellen Gruppen gebildet werden, die von der Polyurethankette getragen werden.

15. Verfahren nach Anspruch 13, wobei die grenzflächenaktiven Stoffe polare Gruppen mit anionischem Charakter enthalten.

16. Verfahren nach einem der Ansprüche 1 bis 15, wobei das Polyurethan selbstvernetzend ist.

17. Verfahren nach einem der Ansprüche 1 bis 16, wobei die Konzentration des Polyurethans in der wässerigen Polyurethandispersion im Bereich von 10 bis 50 Gew.-% liegt.

18. Verfahren nach einem der Ansprüche 1 bis 17, wobei das in der wässerigen Polyurethandispersion verwendete Polyurethan ausgehend von einem Polyol hergestellt wird, das unter den aliphatischen Polyethern oder Polyestern oder Polyethern oder Polyestern ausgewählt ist, deren Hauptkette semiaromatisch ist, wobei das Polyurethan eine Glasübergangstemperatur von -20 °C und darunter und eine Reißdehnung von 100 % oder darüber besitzt.
